# EUROPÄISCHE PATENTSCHRIFT

(11) **EP 2 072 401 B1**
(45) Veröffentlichungstag und Bekanntmachung des Hinweises auf die Patenterteilung: **26.10.2011**
(21) Anmeldenummer: 08170351.4
(22) Anmeldetag: 01.12.2008
(51) Int. Cl.: B64G 1/10, B64G 1/66, B64G 3/00, G06F 12/00

(54) **Verfahren sowie Vorrichtung zum Aufnehmen und Speichern von Daten in einem Raumfahrzeug**
Method and device for recording and storing data in a space vehicle
Procédé et dispositif destinés à l'enregistrement et au stockage de données dans un véhicule spatial

(30) Priorität: 11.12.2007 DE 102007059511
(43) Veröffentlichungstag der Anmeldung: 24.06.2009
(73) Patentinhaber: Deutsches Zentrum für Luft- und Raumfahrt e.V., 51147 Köln (DE)
(72) Erfinder: Axmann, Robert, 81373, München (DE); Wickler, Martin, 80636, München (DE)
(74) Vertreter: von Kreisler Selting Werner

(56) Entgegenhaltungen:
- JP-A- 2003 058 398
- US-A- 3 209 357
- US-A- 5 512 743
- US-A1- 2002 084 385

## Beschreibung

Die Erfindung betrifft ein Verfahren sowie eine Vorrichtung zum Aufnehmen und Speichern von Daten in einem Raumfahrzeug.

Große Datenmengen werden beispielsweise durch aktive oder passive Fernerkundungssensoren in Raumfahrzeugen gesammelt. Fortschritte in der Entwicklung dieser Sensoren führen zu ständig steigenden Datenmengen, welche von diesen Sensoren erzeugt werden. Diese Daten werden zunächst in einem Massenspeicher im Raumfahrzeug zwischengespeichert, bevor sie zu einer Bodenstation übertragen werden. Da die erzeugten Daten über eine Funkverbindung mit limitierter Bandbreite übertragen werden müssen, werden Kompressionsverfahren verwendet, um die Übertragungsmenge zu reduzieren.

Grundsätzlich kann eine verlustfreie oder eine verlustbehaftete Datenkompression durchgeführt werden. Im ersten Fall können die Originaldaten aus den komprimierten Daten wieder komplett, d. h. ohne Verluste, hergestellt werden. Durch eine derartige Kompression gehen somit keine Informationen verloren. Bei einer verlustbehafteten Kompression können die Originaldaten nicht mehr auf den komprimierten Daten hergestellt werden. Stattdessen werden lediglich Daten wieder hergestellt, weiche den Originaldaten ähnlich sind, wobei ein bestimmter Verlust gegenüber den Originaldaten akzeptiert wird.

Da viele Raumfahrzeuge sehr hochwertige Rohdaten generieren, wird eine verlustbehaftete Datenkompression üblicherweise nicht akzeptiert. Dadurch kann ausschließlich ein verlustfreies Datenkompressionsverfahren verwendet werden, wobei die erreichbare Kompressionsrate im Voraus nicht bekannt ist (Shannontheorem). Dies ergibt sich aus dem unterschiedlichen Informationsgehalt der Daten, welcher im Voraus nicht bekannt ist. Während der Planung einer Weltraummission ergibt sich somit eine unbekannte Auslastung des Massenspeichers im Raumfahrzeug, da die erreichbare Kompressionsrate für die ermittelten Daten unbekannt ist. Die Planung in Bezug auf die Aufnahme von Daten in einem Raumfahrzeug erfolgt üblicherweise in einem Kontrollzentrum am Boden, wobei eine feste Kommandosequenz generiert wird. Diese wird zum Raumfahrzeug geschickt, wo die Kommandos zeitlich versetzt ausgeführt werden. Die Ausführung der Kommandos erfolgt üblicherweise zu vorher festegelegten Zeiten, weshalb die Kommandos auch als "time tagged telecommands" bezeichnet werden.

Für die Steuerung des Ablaufs der Datenaufnahme in einem Raumfahrzeug werden im Kontrollzentrum im Voraus Annahmen über die erreichte Kompressionsrate nach Abschluss der Aufnahme von Daten und der Komprimierung gemacht. Die Annahmen über die erreichbare Kompressionsrate, welche im Planungsprozess im Voraus im Kontrollzentrum getroffen werden, weichen beim verlustfreien Kompressionsverfahren häufig von der tatsächlich erreichten Kompressionsrate ab. Die erreichte Datenkompression über- oder unterschreitet den während der Planung angenommenen Wert, was zu einem geringeren oder höheren Füllgrad des Speicher im Raumfahrzeug führt. Hierdurch ergibt sich eine nicht optimale Auslastung des Speichers.

Somit sind die Kapazitäten des Raumfahrzeugs häufig nicht ausreichend, was zu einem Datenverlust führt bzw. in dem anderen Fall ungenutzt, was ebenfalls nachteilig ist.

Da Raumfahrzeuge wie beispielsweise Erdbeobachtungssatelliten, Raumsonden zur Erkundung anderer Planeten usw. für ihre Entwicklung und ihren Betrieb oft mehrstellige Millionenbeträge in Euro kosten, ist es unerlässlich, dass die verfügbaren Ressourcen in einem Raumfahrzeug optimal genutzt werden, so dass eine Verbesserung des sogenannten "science return" erreicht werden kann.

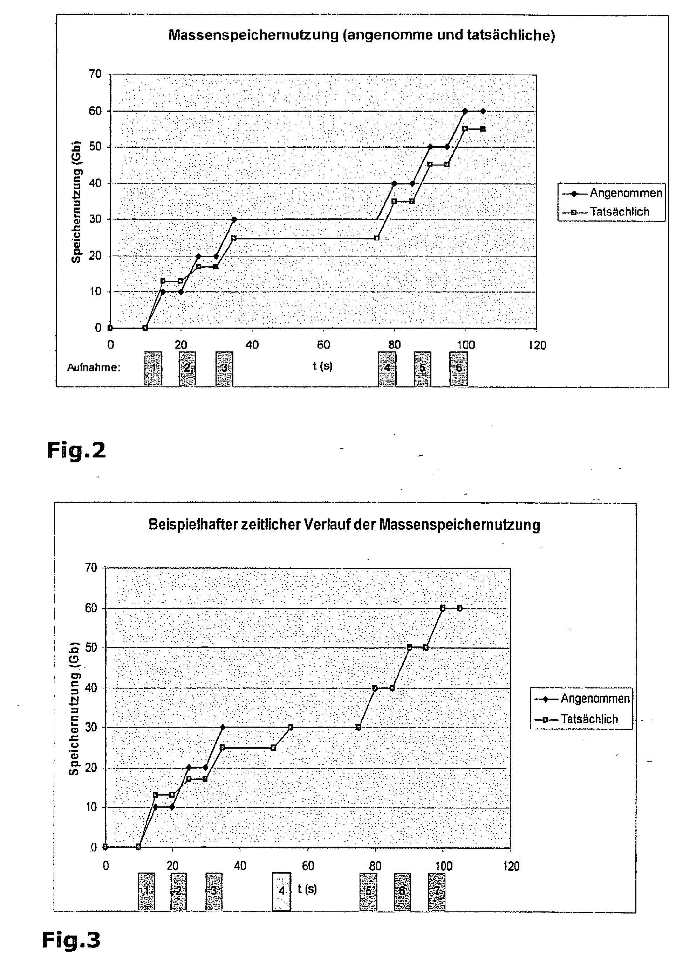

Eine beispielhafte Darstellung der Massenspeichernutzung gemäß dem Stand der Technik ist in Fig. 2 abgebildet. Bei der Aufnahme von Daten handelt es sich in diesem Fall um Bildaufnahmen oder Videoaufnahmen einer Digitalkamera im Raumfahrzeug. Gemäß Fig. 2 werden insgesamt sechs Aufnahmen durchgeführt. Das Raumfahrzeug hat über den betrachteten Zeitraum keine Kontaktmöglichkeit zu der Bodenstation. Die verwendete digitale Kamera erzeugt im Betrieb eine unkomprimierte Datenmenge von 4 Gigabyte pro Sekunde. Es wird ferner angenommen, dass der Massenspeicher maximal 60 Gigabyte speichern kann.

Für die Vorausplanung des Kamerabetriebs in der Bodenstation wird eine durchschnittliche Kompressionsrate von 0,5 angenommen, d. h. es wird von einer Verkleinerung der Daten nach der Kompression auf die Hälfte ausgegangen. Die tatsächlich erreichte Kompressionsrate weicht von Aufnahme zu Aufnahme aufgrund der im Bild enthaltenen Informationen ab.

Gemäß Fig. 2 ist die tatsächlich erreichte Kompression der ersten Aufnahme geringer (mehr Speicherbedarf) und die der zweiten und dritten Aufnahme höher (geringerer Speicherbedarf). Für die Aufnahmen vier bis sechs entspricht die erreichte Kompression der erwarteten Kompressionsrate von 0,5 . Im Ergebnis erfolgt eine nicht vollständige Auslastung des Massenspeichers, da in diesem nur 55 Gigabyte statt der verfügbaren 60 Gigabyte belegt sind.

Aufgrund der verlustfreien Datenkompression ist eine Reaktion auf die tatsächliche Auslastung des Speichers im Raumfahrzeug frühestens nach der Aufnahme der Daten und nach erfolgter Kompression möglich, Eine daran anschließende unmittelbare Reaktion des Bodenkontrollteams auf die tatsächliche Massenspeicherauslastung ist jedoch aufgrund von Unterbrechungen im direkten Funkkontakt zwischen Bodenstation und Raumfahrzeug oder aufgrund von sehr langen Signallaufzeiten oft nicht möglich. Beispielsweise wird der Funkkontakt zwischen Bodenstation und Raumfahrzeug unterbrochen, wenn sich ein Planet zwischen der direkten Verbindungslinie Bodenstationsantenne-Raumfahrzeugantenne befindet. Dies ist beispielsweise relevant für Erdbeobachtungssatelliten. Lange Signallaufzeiten können beispielsweise bei interplanetaren Missionen auftreten, wobei die Übertragung eines Funksignals von der Bodenstation zum Raumfahrzeug und zurück Minuten oder auch Stunden dauern kann. Somit ist eine sofortige Reaktion der Bodenstation auf die tatsächliche Auslastung des Massenspeichers im Raumfahrzeug häufig nicht möglich.

US-A-3,209,357, der nächstliegende Stand der Technik, beschreibt ein Verfahren zum Aufnehmen und Speichern von Daten in einem Raumfahrzeug, wobei eine Kontrollschaltung vorgesehen ist, die die freie Speicherkapazität eines Rekorders im Raumfahrzeug überwacht. Sobald keine freie Speicherkapazität mehr verfügbar ist, wird der Rekorder ausgeschaltet, bis die aufgenommenen Daten an eine Station auf der Erde übermittelt werden können. Sofern genügend freie Speicherkapazität vorhanden ist, werden weitere Aufnahmen durch den Rekorder durchgeführt.

Aufgabe der Erfindung ist es, ein Verfahren sowie eine Vorrichtung zum Aufnehmen und Speichern von Daten zu schaffen, wobei eine bessere Auslastung des Speichers des Raumfahrzeugs ermöglicht wird.

Die Aufgabe wird erfindungsgemäß gelöst durch die Merkmale des Anspruchs 1 sowie durch die Merkmale des Anspruchs 10.

Ein Verfahren zum Aufnahmen und Speichern von Daten in einem Raumfahrzeug weist die folgenden Schritte auf: Zunächst wird die freie Speicherkapazität einer Speichervorrichtung, beispielsweise eines Massenspeichers des Raumfahrzeugs durch eine Onboard-Planungsvorrichtung im Raumfahrzeug abgefragt. Bei der Onboard-Planungsvorrichtung handelt es sich vorzugsweise um einen im Raumfahrzeug angeordneten Prozessor, der ggf. auch weitere Aufgaben erfüllen kann. Erfindungsgemäß wird in einem weiteren Verfahrensschritt durch die Onboard-Planungsvorrichtung ein Befehl zum Aufnehmen von Daten durch eine Datenaufnahmevorrichtung ausgegeben, sofern die Abfrage der Speichervorrichtung durch die Onboard-Planungsvorrichtung ergeben hat, dass genügend freie Speicherkapazität für komprimierte Daten einer Aufnahme von Daten zur Verfügung steht.

Bei der Datenaufnahmevorrichtung kann es sich um eine vorzugsweise digitale Kamera handeln, so dass die aufgenommenen Daten beispielsweise Bildaufnahmen oder Videoaufnahmen sind. Jedoch ist es auch möglich andere Daten, beispielsweise Radardaten, aufzunehmen, die in der Speichervorrichtung des Raumfahrzeugs hinterlegt werden sollen.

Durch das erfindungsgemäße Verfahren wird eine unmittelbare Reaktion auf die tatsächliche Auslastung der Speichervorrichtung im Raumfahrzeug ermöglicht. Ergibt beispielsweise die Abfrage der freien Speicherkapazität der Speichervorrichtung, dass noch 10 Gigabyte freier Speicher zur Verfügung stehen, so kann durch die Onboard-Planungsvorrichtung direkt ein Befehl zum Durchführen einer weiteren Aufnahme von Daten (komprimiert: max. 10 Gigabyte) ausgegeben werden, wobei die Daten in komprimierter Form in der Speichervorrichtung des Raumfahrzeugs gespeichert werden. Eine Reaktion auf die tatsächliche Auslastung der Speichervorrichtung ist somit auch zu Zeitpunkten möglich, in denen kein Funkkontakt zwischen dem Raumfahrzeug und einer Bodenstation besteht. Sofern die Übertragung eines Funksignals vom Raumfahrzeug zur Bodenstation und wieder zurück so viel Zeit beansprucht, dass eine zeitnahe Reaktion auf die tatsächliche Auslastung der Speichervorrichtung nicht möglich ist, wird ebenfalls davon ausgegangen, dass zu diesem Zeitpunkt effektiv kein Kontakt zur Bodenstation besteht.

Erfindungsgemäß erfolgt somit nicht lediglich ein Steuern der Datenaufnahmevorrichtung, sondern ein Regeln der Datenaufnahmevorrichtung durch die Onboard-Planungsvorrichtung. Hierdurch wird eine bessere Auslastung der verfügbaren Speicherkapazität der Speichervorrichtung ermöglicht.

Erfindungsgemäß schließen sich den oben genannten Verfahrensschritten die folgenden weiteren Schritt an: Es wird eine Aufnahme von Daten durch die Datenaufnahmevorrichtung durchgeführt, wonach die aufgenommenen Daten komprimiert und in der Speichervorrichtung des Raumfahrzeugs gespeichert werden.

Erfindungsgemäß werden die bisher genannten Verfahrensschritte so oft wiederholt, bis die Abfrage der Speichervorrichtung durch die Onboard-Planungsvorrichtung ergibt, dass nicht mehr genügend freie Speicherkapazität für weitere aufzunehmende Daten zur. Verfügung steht. Zur Feststellung, ob noch genügend Speicherkapazität für weitere aufzunehmende Daten zur Verfügung steht, kann die Onboard-Planungsvorrichtung für die letzte Aufnahme von einer angenommenen Kompressionsrate ausgehen. Da lediglich in Bezug auf die letzte Aufnahme von einer angenommenen Kompressionsrate ausgegangen wird, bei sämtlichen vorausgegangenen Aufnahmen jedoch die tatsächliche Kompressionsrate berücksichtigt wurde, ist die Auslastung der Speicherkapazität der Speichervorrichtung gegenüber dem Stand der Technik verbessert.

Erfindungsgemäß basiert das Ausgeben des Befehls durch die Onboard-Planungsvorrichtung zum Aufnehmen von Daten durch die Datenaufnahmevorrichtung auf einer autarken Entscheidung der Onboard-Planungsvorrichtung. Dies bedeutet, dass die Entscheidung durch die Onboard-Planungsvorrichtung getroffen wird, ohne dass weitere Anweisungen beispielsweise von einer Bodenstation übermittelt werden. Dies kann beispielsweise auch während einer Unterbrechung des Funkkontaktes zwischen der Bodenstation und dem Raumfahrzeug oder während einer Phase, in der die Signallaufzeit für eine zeitnahe Reaktion auf die tatsächliche Speicherauslastung zu lang sind, erfolgen.

Besonders bevorzugt ist es, dass mehrere Aufträge für das Aufnehmen von Daten, beispielsweise mehrere Aufträge für Bildaufnahmen verschiedener Objekte durch die Datenaufnahmevorrichtung, von einer Bodenstation zur Onboard-Planungsvorrichtung übermittelt werden. Je nach Verfügbarkeit von freier Speicherkapazität auf der Speichervorrichtung kann die Onboard-Planungsvorrichtung selbstständig die Anzahl und/oder die Reihenfolge bestimmen, in der die Aufträge der Bodenstation durch die Datenaufnahmevorrichtung durchgeführt werden. Dies kann insbesondere unmittelbar vor dem Ausführungszeitpunkt der gewünschten Datenaufnahme erfolgen, so dass die Befehle nicht zu vorher festgesetzten Zeitpunkten ausgeführt werden müssen.

Das Bestimmen der Reihenfolge, in der die Aufträge der Bodenstation durchgeführt werden, kann beispielsweise dann wichtig sein, wenn der Onboard-Planungsvorrichtung bekannt ist, dass ein bestimmter Auftrag weniger Speicherplatz beanspruchen wird als ein anderer Auftrag, so dass der erste Auftrag mit dem geringeren Speicherplatzbedarf vorgezogen wird, sofern für die komprimierten Daten, die aus der Durchführung dieses Auftrags resultieren, noch genügend Speicherplatz auf der Speichervorrichtung zur Verfügung steht. Ziel des erfindungsgemäßen Verfahrens ist eine größtmögliche Ausnutzung des verfügbaren Speicherplatzes der Speichervorrichtung.

Nachdem die Onboard-Planungsvorrichtung entschieden hat, dass nicht mehr genügend Speicherplatz für eine weitere Aufnahme von Daten zur Verfügung steht, können die gespeicherten Daten von der Speichervorrichtung an die Bodenstation übermittelt werden.

Die Erfindung betrifft ferner eine Vorrichtung, nämlich ein Raumfahrzeug, das insbesondere zur Durchführung des bisher beschriebenen Verfahrens geeignet ist. Das Raumfahrzeug umfasst eine Datenaufnahmevorrichtung wie beispielsweise eine digitale Videokamera zum Aufnehmen von Daten sowie eine Kompressionsvorrichtung zum Komprimieren der aufgenommenen Daten. Ferner ist eine Speichervorrichtung zum Speichern der komprimierten Daten vorgesehen. Das Raumfahrzeug weist weiterhin eine Abfragevorrichtung zum Abfragen des freien Speicherplatzes der Speichervorrichtung und eine Onboard-Planungsvorrichtung zum selbstständigen Bestimmen der Reihenfolge und/oder der Anzahl, in der Aufnahmen von Daten durch die Datenaufnahmevorrichtung durchgeführt werden, auf. Das Bestimmen der Reihenfolge und/oder der Anzahl der durchgeführten Aufnahmen erfolgt hierbei in Abhängigkeit des zur Verfügung stehenden freien Speicherplatzes der Speichervorrichtung.

Erfindungsgemäß sind die Datenaufnahmevorrichtung, die Kompressionsvorrichtung, die Speichervorrichtung, die Abfragevorrichtung und die Onboard-Planungsvorrichtung im und/oder am Raumfahrzeug angeordnet. Die_Kommunikation zwischen der Speichervorrichtung, der Abfragevorrichtung und der Onboard-Planungsvorrichtung kann somit auf direktem Weg ohne eine zeitliche Verzögerung erfolgen, so dass es möglich ist, auf die tatsächliche Speicherauslastung der Speichervorrichtung sofort zu reagieren.

Besonders bevorzugt ist die Abfragevorrichtung in die Onboard-Planungsvorrichtung integriert, wobei beide Komponenten durch einen dedizierten Prozessor ausgebildet sein können. Alternativ ist es möglich, die genannten Komponenten in einen bereits vorhandenen Prozessor des Raumfahrzeugs, beispielsweise durch ein Softwaremodul zu integrieren. Die Installation eines zusätzlichen Prozessors bietet den Vorteil, dass die Rechenleistung des Prozessors auf die Gegebenheiten der jeweiligen Mission des Raumfahrzeugs angepasst werden kann. Weiterhin können Prozessorprobleme auf nur einen Prozessor beschränkt werden.

Sofern die genannten Funktionen durch ein Softwaremodul auf einem bereits vorhandenen Prozessor durchgeführt werden sollen, muss dieser Prozessor in der Lage sein, die Rechenleistung für die Onboard-Planungsvorrichtung sowie ggf. die Abfragevorrichtung zur Verfügung zu stellen. Weiterhin müssen die nötigen Schnittstellen für das Softwaremodul, wie im Folgenden beschrieben, zur Verfügung gestellt werden. Die Verwendung eines bereits vorhandenen Prozessors hat den Vorteil, dass keine zusätzliche Hardware oder Anpassungen der Hardware im Raumfahrzeug nötig sind.

Die Onboard-Planungsvorrichtung in Form eines Softwaremoduls verfügt vorzugsweise über eine erste Schnittstelle zum Raumfahrzeug, um Kommandos an das Raumfahrzeug zu schicken oder vom Raumfahrzeug zu empfangen, und über eine zweite Schnittstelle, um Statusinformationen vom Raumfahrzeug zu lesen oder an das Raumfahrzeug zu schicken (z.B. Telemetrie). Die erste Schnittstelle ermöglicht hierbei das Senden von Telekommandos durch die Bodenstation an die Onboard-Planungsvorrichtung (beispielsweise Aktivierung, Deaktivierung, Aufnahmewünsche, Parametereinstellung usw.) sowie die Regelung des Raumfahrzeugs durch Kommandos der Onboard-Planungsvorrichtung. Die zweite Schnittstelle stellt Informationen über die verwendeten Ressourcen der Speichervorrichtung zur Verfügung.

Anstatt eine vorgegebene Kommandosequenz im Speicher des Raumfahrzeugs abzulegen, werden die Kommandos vorzugsweise erst zum Ausführungszeitpunkt von der Onboard-Planungsvorrichtung erzeugt und über die Kommandoschnittstelle an das Raumfahrzeug übermittelt.

Vorzugsweise weist das erfindungsgemäße Raumfahrzeug ferner eine Empfangsvorrichtung zum Empfangen von Daten und/oder Anweisungen von einer Bodenstation sowie ggf. eine Sendevorrichtung zum Übertragen von Daten an eine Bodenstation auf.

Im Folgenden werden bevorzugte Ausführungsformen der Erfindung anhand von Figuren erläutert. Es zeigen dabei:
- Fig. 1: eine schematische Ansicht des erfindungsgemäßen Raumfahrzeugs,
- Fig. 2: eine beispielhafte Darstellung der Massenspeichernutzung gemäß dem Stand der Technik, und
- Fig. 3: eine beispielhafte Darstellung der Massenspeichernutzung bei Durch- führung des erfindungsgemäßen Verfahrens.

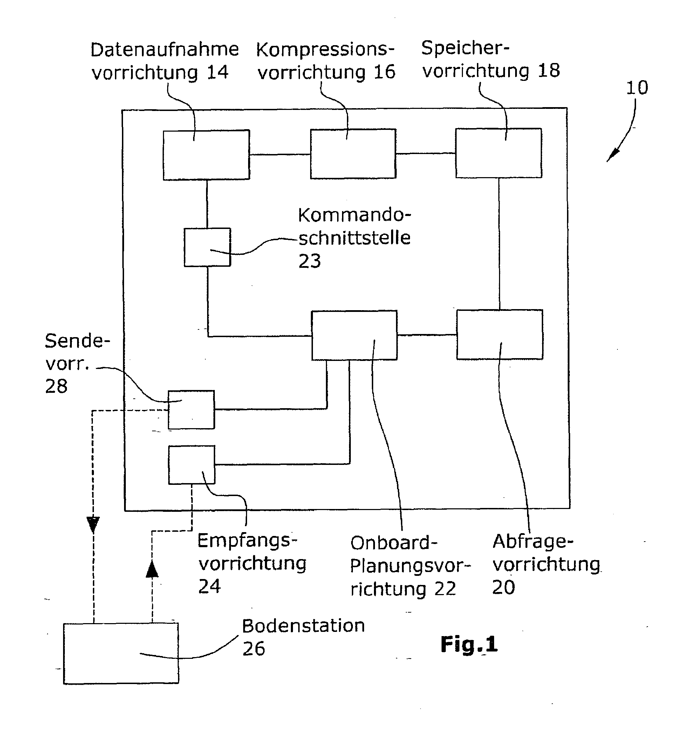

Gemäß Fig. 1 sind in einem Raumfahrzeug 10 eine Datenaufnahmevorrichtung 14, eine Kompressionsvorrichtung 16, eine Speichervorrichtung 18, eine Abfragevorrichtung 20 sowie eine Onboard-Planungsvorrichtung 22 vorgesehen. Die Onboard-Planungsvorrichtung 22 kann beispielsweise über die Kommandoschnittstelle 23 mit der Datenaufnahmevorrichtung 14 verbunden sein. Im oder am Raumfahrzeug 10 sind ferner eine Empfangsvorrichtung 24 sowie eine Sendevorrichtung 28 vorgesehen, durch die ein Funkkontakt zur Bodenstation 26 hergestellt werden kann. Im erfindungsgemäßen Verfahren erfolgt ein Abfragen der freien Speicherkapazität der Speichervorrichtung 18 durch die Onboard-Planungsvorrichtung 22 im Raumfahrzeug 10. Sofern die Abfrage der Speichervorrichtung 18 durch die Onboard-Planungsvorrichtung 22 ergeben hat, dass genügend freie Speicherkapazität für komprimierte Daten einer Aufnahme von Daten zur Verfügung steht, wird durch die Onboard-Planungsvorrichtung 22 ein Befehl zum Aufnehmen von Daten beispielsweise durch die als Kamera ausgebildete Datenaufnahmevorrichtung 14 ausgegeben. Die Kamera 14 führt hiernach beispielsweise eine Bildaufnahme durch, die anschließend in der Kompressionsvorrichtung 16 verlustfrei komprimiert und in der Speichervorrichtung 18 gespeichert wird.

Die Onboard-Planungsvorrichtung 22 kann eine nicht dargestellte Auftragsspeichervorrichtung zum Speichern von Aufträgen der Bodenstation 26 aufweisen. Sofern in der Auftragsspeichervorrichtung ein Auftrag zur Durchführung einer weiteren Aufnahme durch die Kamera 14 vorhanden ist, prüft die Onboard-Planungsvorrichtung 22 über die Abfragevorrichtung 20 die freie Speicherkapazität der Speichervorrichtung 18. Sofern diese Abfrage ergibt, dass genügend freie Speicherkapazität für die gewünschte Kameraaufnahme zur Verfügung steht, wird durch die Onboard-Planungsvorrichtung 22 ggf. über die Kommandoschnittstelle 23 an die Kamera 14 der Befehl zum Durchführen der Aufnahme ausgegeben. Die Onboard-Planungsvorrichtung 22 geht hierbei von einer angenommenen Kompressionsrate beispielsweise mit dem Faktor 0,5 aus, um ermitteln zu können, wieviel Speicherplatz bei der nächsten Aufnahme ungefähr auf der Speichervorrichtung 18 vorhanden sein muss.

Auch ist es möglich, dass die Onboard-Planungsvorrichtung 22 zwischen mehreren Aufträgen in der Auftragsspeichervorrichtung auswählt, wobei derjenige Auftrag ausgewählt wird, der die effektivste Ausnutzung des Speicherplatzes der Speichervorrichtung 18 ermöglicht. Unter der effektivsten Speicherplatzausnutzung wird verstanden, dass der zur Verfügung stehende Speicherplatz in keinem Fall überfüllt, jedoch in dem größtmöglichen Umfang genutzt wird.

## Patentansprüche

1. Verfahren zum Aufnehmen und Speichern von Daten in einem Raumfahrzeug (10) mit den Schritten:
a) Abfragen der freien Speicherkapazität einer Speichervorrichtung (18) des Raumfahrzeugs (10) durch eine Onboard-Planungsvorrichtung (22) im Raumfahrzeug (10) und
b) Ausgeben eines Befehls durch die Onboard-Planungsvorrichtung (22) zum Aufnehmen von Daten durch eine Datenaufnahmevorrichtung (14), sofern die Abfrage der Speichervorrichtung (18) durch die Onboard-Planungsvorrichtung (22) ergeben hat, dass genügend freie Speicherkapazität für die Aufnahme von Daten zur Verfügung steht,
c) Aufnehmen von Daten durch die Datenaufnahmevorrichtung (14),
d) Komprimieren der aufgenommenen Daten und
e) Speichern der komprimierten Daten in der Speichervorrichtung (18) des Raumfahrzeugs (10),
**dadurch gekennzeichnet,**
- **dass** die Verfahrensschritte a) und b) und die Verfahrensschritte c) bis e) so oft wiederholt werden, bis die Abfrage der Speichervorrichtung (18) durch die Onboard-Planungsvorrichtung (22) ergibt, dass nicht mehr genügend freie Speicherkapazität für weitere aufzunehmende Daten zur Verfügung steht, wobei das Ausgeben des Befehls durch die Onboard-Planungsvorrichtung (22) zum Aufnehmen von Daten durch die Datenaufnahmevorrichtung (14) auf einer autarken Entscheidung der Onboard-Planungsvorrichtung (22) basiert.

2. Verfahren nach Anspruch 1, **dadurch gekennzeichnet, dass** die Entscheidung über das Aufnehmen von Daten durch die Datenaufnahmevorrichtung (14) von der Onboard-Planungsvorrichtung (22) ohne einen entsprechenden Befehl durch eine das Raumfahrzeug (10) steuernde Bodenstation (26) selbstständig getroffen wird, wobei insbesondere die Entscheidung über das Aufnehmen von Daten durch die Datenaufnahmevorrichtung (14) von der Onboard-Planungsvorrichtung (22) während einer Unterbrechung des Funkkontaktes zwischen einer Bodenstation (26) und dem Raumfahrzeug (10) erfolgt.

3. Verfahren nach einem der Ansprüche 1 bis 2, **dadurch gekennzeichnet, dass** die Datenaufnahmevorrichtung (14) eine Kamera (14), insbesondere eine Digitalkamera ist und die aufgenommenen Daten eine Videoaufnahme und/oder eine Bildaufnahme sind.

4. Verfahren nach einem der Ansprüche 1 bis 3, **dadurch gekennzeichnet, dass** der erforderliche Speicherplatz in der Speichervorrichtung (18) für die komprimierten Daten einer Aufnahme von Daten vor der Kompression unbekannt ist und insbesondere die Kompression der Daten eine verlustfreie Kompression ist.

5. Verfahren nach einem der Ansprüche 1 bis 4, **dadurch gekennzeichnet, dass** das Raumfahrzeug (10) ein Satellit und/oder eine Raumsonde und insbesondere unbemannt ist.

6. Verfahren nach einem der Ansprüche 1 bis 5, **gekennzeichnet durch** den zusätzlichen den Verfahrensschritten a) und b) oder a) bis e) vorausgehenden Schritt: Übermitteln mehrerer Aufträge für das Aufnehmen von Daten **durch** die Datenaufnahmevorrichtung (14) von einer Bodenstation (26) zur Onboard-Planungsvorrichtung (22).

7. Verfahren nach einem der Ansprüche 1 bis 6, **dadurch gekennzeichnet, dass** die Onboard-Planungsvorrichtung (22) je nach Verfügbarkeit von freier Speicherkapazität auf der Speichervorrichtung (18) selbstständig insbesondere unmittelbar vor dem Ausführungszeitpunkt die Anzahl und/oder die Reihenfolge bestimmt, in der die Aufträge einer Bodenstation (26) durch die Datenaufnahmevorrichtung (14) durchgeführt werden.

8. Verfahren nach einem der Ansprüche 1 bis 7, **dadurch gekennzeichnet, dass** die Reihenfolge und/oder die Anzahl der Aufnahmen der Daten durch die Datenaufnahmevorrichtung (14) durch die Onboard-Planungsvorrichtung (22) derart geregelt werden, dass eine größtmögliche Ausnutzung des verfügbaren Speicherplatzes der Speichervorrichtung (18) des Raumfahrzeugs (10) erfolgt.

9. Verfahren nach einem der Ansprüche 1 bis 8, **gekennzeichnet durch** den zusätzlichen Schritt: Übermitteln der gespeicherten Daten von der Speichervorrichtung (18) an eine Bodenstation (26), nachdem die Onboard-Planungsvorrichtung (22) entschieden hat, dass nicht genügend Speicherplatz für eine weitere Aufnahme von Daten zur Verfügung steht.

10. Raumfahrzeug (10) insbesondere zur Durchführung des Verfahrens nach einem der Ansprüche 1 bis 9 mit
- einer Datenaufnahmevorrichtung (14) zum Aufnehmen von Daten,
- einer Speichervorrichtung (18) zum Speichern der komprimierten Daten,
- einer Abfragevorrichtung (20) zum Abfragen des freien Speicherplatzes der Speichervorrichtung (18),
**gekennzeichnet durch**
- eine Kompressionsvorrichtung (16) zum Komprimieren der aufgenommenen Daten,
- eine Onboard-Planungsvorrichtung (22) zum selbstständigen Bestimmen der Reihenfolge und/oder der Anzahl, in der Aufnahmen von Daten **durch** die Datenaufnahmevorrichtung (14) durchgeführt werden in Abhängigkeit des zur Verfügung stehenden freien Speicherplatzes der Speichervorrichtung (18),
- wobei die Datenaufnahmevorrichtung (14), die Kompressionsvorrichtung (16), die Speichervorrichtung (18), die Abfragevorrichtung (20) und die Onboard-Planungsvorrichtung (22) im und/oder am Raumfahrzeug (10) angeordnet sind.

11. Raumfahrzeug nach Anspruch 10, **dadurch gekennzeichnet, dass** die Abfragevorrichtung (20) in die Onboard-Planungsvorrichtung (22) integriert ist.

12. Raumfahrzeug nach Anspruch 10 oder 11, **gekennzeichnet durch** eine Empfangsvorrichtung (24) zum Empfangen von Daten und/oder Anweisungen von einer Bodenstation (26) und insbesondere einer Sendevorrichtung (28) zum Übertragen von Daten an eine Bodenstation (26).

13. Raumfahrzeug nach einem der Ansprüche 10 bis 12, **dadurch gekennzeichnet, dass** die Onboard-Planungsvorrichtung (22) und/oder die Abfragevorrichtung (20) in einen bereits vorhandenen Prozessor des Raumfahrzeugs (10) insbesondere durch ein Softwaremodul integriert sind und insbesondere durch einen dedizierten Prozessor ausgebildet sind.

## Claims

1. A method for recording and storing data in a spacecraft (10), comprising the following steps:
a) enquiring about the free storage capacity of a storage device (18) of the spacecraft (10) via an onboard planning device (22) in the spacecraft (10), and
b) outputting a command by the onboard planning device (22) to record data by means of a data recording device (14) if the interrogation of the storage device (18) by the onboard planning device (22) has shown that sufficient free storage capacity is available for the recording of data,
c) recording of data by the data recording device (14),
d) compressing the recorded data, and
e) storing the compressed data in the storage device (18) of the spacecraft (10),
**characterized in**
- **that** the steps a) and b) and the steps c) to e) are repeated until the interrogation of the storage device (18) by the onboard planning device (22) yields that no sufficient free storage capacity is available for further data to be recorded, wherein the output of the command by the onboard planning device (22) to record data by means of the data recording device (14) is based on an autarkic decision made by the onboard planning device (22).

2. The method of claim 1, **characterized in that** the decision on the recording of data by means of the data recording device (14) is made independently by the onboard planning device (22) without a corresponding command from a ground control station (26) controlling the spacecraft (10), wherein in particular the decision on the recording of data by means of the data recording device (14) is made by the onboard planning device (22) during an interruption in the radio contact between a ground control station (26) and the spacecraft (10).

3. The method of one of claims 1 to 2, **characterized in that** the data recording device (14) is a camera (14), in particular a digital camera, and the recorded data are a video recording and/or an image.

4. The method of one of claims 1 to 3, **characterized in that** the storage space in the storage device (18) required for the compressed data of a data recording is unknown prior to the compression and that in particular the compression of the data is a lossless compression.

5. The method of one of claims 1 to 4, **characterized in that** the spacecraft (10) is a satellite and/or a space probe and, in particular, is unmanned.

6. The method of one of claims 1 to 5, **characterized by** the following additional step preceding the method steps a) and b) or a) to e): transmitting a plurality of requests for the recording of data by means of the data recording device (14) from a ground control station (26) to the onboard planning device (22).

7. The method of one of claims 1 to 6, **characterized in that**, depending on the availability of free storage capacity in the storage device (18), the onboard planning device (22) independently determines the number and/or the sequence in which the requests from a ground control station (26) are executed by the data recording device (14), the determination being made in particular immediately before the time of execution.

8. The method of one of claims 1 to 7, **characterized in that** the sequence and/or the number of the data recordings made by the data recording device (14) are controlled by the onboard planning device (22) such that a maximum possible use is made of the available storage capacity of the storage device (18) of the spacecraft (10).

9. The method of one of claims 1 to 8, **characterized by** the additional step of: transmitting the stored data from the storage device (18) to a ground control station (26) after the onboard panning device (22) has decided that no sufficient storage space is available for a further recording of data.

10. A spacecraft (10), in particular for performing the method of one of claims 1 to 9, comprising:
- a data recording device (14) for recording data,
- a storage device (18) for storing the compressed data,
- an interrogation device (20) for enquiring about the free storage space of the storage device (18),
**characterized by**
- a compression device (16) for compressing the recorded data,
- an onboard planning device (22) for the independent determination of the sequence and/or the number of data recordings made by the data recording device (14), the determination being made in dependence on the available free storage space of the storage device (18),
- wherein the data recording device (14), the compression device (16), the storage device (18), the interrogation device (20) and the onboard planning device (22) are arranged in and/or at the spacecraft (10).

11. The spacecraft of claim 10, **characterized in that** the interrogation device (20) is integrated in the onboard planning device (22).

12. The spacecraft of claim 10 or 11, **characterized by** a receiver device (24) for receiving data and/or instructions from a ground control station (26) and in particular a transmitter device (28) for transmitting data to a ground control station (26).

13. The spacecraft of one of claims 10 to 12, **characterized in that** the inboard planning device (22) and/or the interrogation device (20) are integrated in an already existing processor of the spacecraft (10), in particular in the form of a software module, and are embodied in particular as a dedicated processor.

## Revendications

1. Procédé destiné à l'enregistrement et au stockage de données dans un véhicule spatial (10), comprenant les étapes suivantes:
a) demander la capacité de stockage libre d'un dispositif de stockage (18) du véhicule spatial (10) par un dispositif de planning embarqué (22) dans ledit véhicule spatial (10), et
b) sortir une commande à partir du dispositif de planning embarqué (22) pour l'enregistrement de données par un dispositif d'enregistrement de données (14), si l'interrogation du dispositif de stockage (18) par le dispositif de planning embarqué (22) donne qu'il y a suffisamment de capacité de stockage libre pour l'enregistrement de données,
c) enregistrer des données à l'aide du dispositif d'enregistrement de données (14),
d) comprimer les données enregistrées, et
e) stocker les données comprimées dans le dispositif de stockage (18) du véhicule spatial (10),
**caractérisé en ce que**
- les étapes de procédé a) et b) et les étapes de procédé c) à e) sont réitérées jusqu'à ce que l'interrogation du dispositif de stockage (18) par le dispositif de planning embarqué (22) donne qu'il n'y a plus suffisamment de capacité de stockage libre pour autres données à enregistrer, la sortie de la commande par le dispositif de planning embarqué (22) pour l'enregistrement de données par le dispositif d'enregistrement de données (14) se basant sur une décision autarcique du dispositif de planning embarqué (22).

2. Procédé selon la revendication 1, **caractérisé en ce que** la décision sur l'enregistrement de données par le dispositif d'enregistrement de données (14) est faite indépendemment par le dispositif de planning embarqué (22) sans qu'une commande correspondante n'a été donné par une station terrestre (26) commandant ledit véhicule spatiale (10), ou il est particulièrement la décision sur l'enregistrement de données par le dispositif d'enregistrement de données (14) qui est faite par ledit dispositif de planning embarqué (22) pendant une interruption du contact radio entre une station terrestre (26) et le véhicule spatial (10).

3. Procédé selon l'une des revendications 1 à 2, **caractérisé en ce que** le dispositif d'enregistrement de données (14) est une caméra (14), notamment une caméra numérique, et les données enregistrées sont un enregistrement vidéo et/ou des images.

4. Procédé selon l'une des revendications 1 à 3, **caractérisé en ce que** la mémoire libre nécessaire dans le dispositif de stockage (18) pour les données comprimées d'un enregistrement de données n'est pas connue avant la compression et que notamment la compression des données est une compression sans perte.

5. Procédé selon l'une des revendications 1 à 4, **caractérisé en ce que** le véhicule spatial (10) est un satellite et/ou une sonde spatiale et notamment est sans pilote.

6. Procédé selon l'une des revendications 1 à 5, **caractérisé par** l'étape additionnelle, précédant aux étapes a) et b) ou a) à e): transmettre plusieurs ordres d'enregistrement de données par ledit dispositif d'enregistrement de données (14) à partir d'une station terrestre (26) jusqu'au dispositif de planning embarque (22).

7. Procédé selon l'une des revendications 1 à 6, **caractérisé en ce qu'**en fonction de la disponibilité de capacité de stockage libre dans ledit dispositif de stockage (18), ledit dispositif de planning embarqué (22) détermine indépendemment le nombre et/ou la suite dans laquelle les ordres données par une station terrestre (26) sont exécutées par le dispositif d'enregistrement de données (14), la détermination étant faite notamment immédiatement avant le temps d'exécution.

8. Procédé selon l'une des revendications 1 à 7, **caractérisé en ce que** la suite et/ou le nombre des enregistrements de données par ledit dispositif d'enregistrement de données (14) sont gérés par ledit dispositif de planning embarqué (22) de sorte que l'emplacement de mémoire disponible dans le dispositif de stockage (18) du véhicule spatial (10) est utilisé autant que possible.

9. Procédé selon l'une des revendications 1 à 8, **caractérisé par** l'étape additionnelle: transmettre les données stockées à partir du dispositif de stockage (18) à une station terrestre (26) après le dispositif de planning embarqué (22) a décidé qu'il n'y a pas suffisamment de mémoire pour un autre enregistrement de données.

10. Véhicule spatial (10), notamment pour l'exécution du procédé selon l'une des revendications 1 à 9, comprenant:
- un dispositif d'enregistrement de données (14) pour l'enregistrement de données,
- un dispositif de stockage (18) pour le stockage de données comprimées,
- un dispositif d'interrogation (20) pour demander l'emplacement de mémoire libre dudit dispositif de stockage (18),
**caractérisé par**
- un dispositif de compression (16) pour comprimer les données enregistrées,
- un dispositif de planning embarqué (22) destiné à déterminer indépendemment la suite et/ou le nombre des exécutions d'enregistrements de données par ledit dispositif d'enregistrement de données (14), la détermination étant faite en fonction de mémoire libre disponible dans ledit dispositif de stockage (18),
- ledit dispositif d'enregistrement de données (14), ledit dispositif de compression (16), ledit dispositif de stockage (18), ledit dispositif d'interrogation (20) et ledit dispositif de planning embarqué (22) étant prévus dans et/ou sur ledit véhicule spatial (10).

11. Véhicule spatial selon la revendication 10, **caractérisé en ce que** le dispositif d'interrogation (20) est intégré dans ledit dispositif de planning embarqué (22).

12. Véhicule spatial selon les revendications 10 ou 11, **caractérisé par** un dispositif récepteur (24) destiné à recevoir des données et/ou des instructions d'une station terrestre (26), et notamment par un dispositif transmetteur (28) pour transmettre des données à une station terrestre (26).

13. Véhicule spatial selon l'une des revendications 10 à 12, **caractérisé en ce que** le dispositif de planning embarqué (22) et/ou le dispositif d'interrogation (20) sont intégrés dans un processeur déjà présent dans ledit véhicule spatial (10), notamment sous forme d'un module logiciel, et sont réalisés notamment sous forme d'un processeur dédié.
